# EUROPÄISCHE PATENTSCHRIFT

(11) **EP 1 394 225 B1**
(45) Veröffentlichungstag und Bekanntmachung des Hinweises auf die Patenterteilung: **20.11.2013**
(21) Anmeldenummer: 02017957.8
(22) Anmeldetag: 10.08.2002
(51) Int. Cl.: C09D 7/00, B01J 13/00, B01F 17/00, B01F 17/56

(54) **Wasser-in-Öl-Verdickerdispersionen auf Basis natürlicher Öle mit verbesserter Umweltverträglichkeit**
Water-in-oil thickener dispersions based on natural oils with improved environmental compatibility
Dispersions d'épaississant, eau-dans-huile, à base d' huiles naturelles à compatibilité améliorée avec l' environnement

(43) Veröffentlichungstag der Anmeldung: 03.03.2004
(73) Patentinhaber: Lefatex Chemie GmbH, 41379 Brüggen-Bracht (DE)
(72) Erfinder: Schneider, Reinhold, Dr., 70597 Stuttgart (DE); Thölen, Franz, Dipl.-Ing., 41379 Brüggen-Bracht (DE)
(74) Vertreter: Klöpsch, Gerald

(56) Entgegenhaltungen:
- EP-A- 0 077 297
- EP-A- 0 131 272
- EP-A- 0 210 130
- EP-A- 0 895 805
- WO-A-99/36445
- FR-A- 2 793 165
- US-A- 1 976 679
- DATABASE WPI Section Ch, Week 199412 Derwent Publications Ltd., London, GB; Class A18, AN 1994-098019 XP002229679 & JP 06 049401 A (TOHOKU RIKO KK), 22. Februar 1994 (1994-02-22)

## Beschreibung

Beim Textildruck werden üblicherweise pulverförmige Verdickungsmittel oder Wasser-in-Öl-Verdickerdispersionen auf Basis von Mineralölen oder Schwerbenzin als Verdickungsmittel eingesetzt. Speziell beim Pigmentdruck werden sehr hohe Anforderungen an das Verdickungsmittel hinsichtlich der griffbeeinflussenden Eigenschaften gestellt, da bei diesem Verfahren nach dem Fixierprozess nicht nachgewaschen wird. Die Verwendung herkömmlicher körperreicher Verdickungsmittel, wie sie beispielsweise beim Reaktivdruck verwendet werden, ist bei diesem Druckverfahren nur bedingt möglich möglich, da die Einlagerung des Verdickers in den Bindemittelfilm eine negative Griffbeeinflussung der Textildrucke hervorrufen und zudem die Naßechtheit der Druckware entscheidend verschlechtern würde. Der beste Warengriff wird mit Emulsionsverdickungen auf Basis von Mineralöl erhalten, die allerdings wegen ihrer hohen Emissionsbelastung und schlechten Umweltverträglichkeit nicht mehr verwendet werden. Als Alternative werden hochmolekulare synthetische Polymerisatverdicker (z.B. Salze der Homo- und Copolymerisate von ungesättigten Säuren wie Acryl- und Maleinsäure) entweder als Pulver oder wegen des besseren Handlings in zunehmendem Maße als Wasser-in-Öl-Verdickerdispersionen eingesetzt, die bereits in kleinsten Einsatzmengen ausreichende Verdickerwirkung zeigen und den Griff nur wenig beeinträchtigen. Ein gravierender Nachteil dieser konventionellen Wasser-in-Ol-Verdickerdispersionen besteht jedoch in der Verwendung von biologisch schwer abbaubaren Mineralöl/Schwerbenzin als kontinuierliche organische Phase (Ölphase), die hohe Emissionsbelastungen hervorrufen und die Umwelt schädigen.
Formulierungen von Wasser-in-Öl-Verdickerdispersionen sind in JP 06069401 A und US-A-1 976 679 beschrieben. Anwendung fmden diese Formulierungen allerdings als Druckpate/Tinte im Matrizendruck und können aufgrund des geringen Anteils an Verdickungsmittel nicht als "flüssige" Verdicker eingesetzt werden.
In der japanischen ungeprüften Patentveröffentlichung Nr. 06049401 A (1994) wird eine Druckfarbe auf Basis einer Emulsion beschrieben, die einen HLB-Wert von 3 bis 5,5 aufweist und deren Wasserphase verdickt ist. Die Druckfarbe ist aufgebaut aus einer Emulsion mit 10 bis 50 Gew.-% einer Ölphase und 90 bis 50 Gew.-% einer wäßrigen Phase. Der Emulgator ist bevorzugt nicht-ionisch wie ein Ester einer höheren Fettsäure mit Sorbitan. Zur Verdickung der Wasserphase wird der wäßrigen Phase ein wasserlösliches Polymer wie Polyacrylsäure oder Natriumpolyacrylat zugesetzt. Die Wasserphase enthält ferner Elektrolyte, Fungizide sowie Verdunstungsverzögerer.
Die US-A-1 976 679 beschreibt Dispersionen zur Behandlung für die Verbesserung von Fasermaterial, insbesondere bei der Herstellung von kolloidalen Pasten von Färbematerialien wie anorganischen oder organischen Pigmenten für die Färbung von Geweben. Diese Zubereitungen enthalten eine wasserlösliche amorphe Polyacrylsäure und einen wasserunlöslichen Farbstoff. Die Polyacrylsäure dient in Gegenwart von Wasser als Verdickungsmittel der entstehenden Dispersion. Die Zusammensetzungen können auch als Emulsionen von wasserunlöslichen organischen Flüssigkeiten wie Kohlenwasserstoffen, pflanzlichen oder tierischen Ölen oder Fetten in einer wäßrigen Lösung des wasserlöslichen amorphen Polyacrylats vorliegen.

Aufgrund des zunehmenden ökologischen Bewusstseins sowie der sich verschärfenden Gesetzeslage besteht für ökologisch verträgliche Wasser-in-Öl-Verdickerdispersionen ein überaus großer Bedarf. Voraussetzung dafür ist aber der Ersatz des Mineralöls/Schwerbenzins in der kontinuierliche organische Ölphase durch biologisch abbaubare natürliche Öle und Emulgatoren/Dispergatoren, was Aufgabe und Gegenstand der vorliegenden Erfindung ist.
Die vorliegende Erfindung beschreibt ein Verfahren zur Herstellung von Wasser-in-Öl-Verdickerdispersionen, bestehend aus einer kontinuierlichen organischen Phase aus natürlichen Ölen und darin fein verteilten wasserlöslichen Verdickungsmitteln. Die vorliegende Erfindung betrifft des weiteren die Verwendung derart flüssig formulierter Verdickungsmittel zur Herstellung von Druckpasten für den Textildruck.

Die vorliegende Erfindung betrifft in einer ersten Ausführungsform die flüssige und gießförmige Zubereitung einer Wasser-in-Öl-Verdickerdispersion, wie im Anspruch 1 beschrieben

Verdickungsmittel, die für die Herstellung der beschriebenen Wasser-in-Öl-Verdickerdispersionen verwendet werden können sind ausgewählt aus der Gruppe der Alginate sowie aus der Gruppe der Homo- und Copolymerisate von ungesättigten Säuren wie Acryl- und Maleinsäure. Besonders bevorzugt eignen sich Alkali- und Ammoniumsalze der beschriebenen Polyelektrolyte. Ganz besonders bevorzugt können Ammoniumsalze der Homo- und Copolymerisate von ungesättigten organischen Säuren eingesetzt werden. Der Körpergehalt der verwendeten Verdickungsmittel liegt bevorzugt bei < 80 g/kg fertiger Druckpaste ganz besonders bevorzugt werden solche synthetischen Polyelektrolyte eingesetzt, die bereits < 40 g/kg fertiger Druckpaste eine ausreichende Druckpastenviskosität von 7-8 Pas bei D=10s⁻¹ ergeben, wobei die Viskositäten der hergestellten Wasser-in-Öl-Verdickerdispersionen niedriger als 3 Pas bei einer Scherrate von D=10s⁻¹ liegen.

Als unmodifizierte und modifizierte natürliche Öle für die erfindungsgemäße Wasser-in-Öl-Verdickerdispersionen dienen bevorzugt Öle auf Basis von Rapsöl, Erdnussöl, Olivenöl sowie Leinöl und ganz besonders bevorzugt Sonnenblumenöl.

Als erfindungsgemäße Dispergatoren und Emulgatoren für die W/O Emulsionen kommen solche zur Anwendung, deren HLB-Wert <8 liegt, ganz besonders bevorzugte HLB-Werte liegen bei 3,7-4,3. Besonders bevorzugte Dispergatoren sind Sorbitanester der Formel R-[S]X in der R für einen gesättigten oder ungesättigten Fettalkohol, Fettamin oder Fettsäure mit 10 bis 20 C-Atomen steht, S einen Sorbitanrest bedeuted und x für eine Zahl von ≥1 steht. Des weiteren können sowohl gesättigte als auch ungesättigte Alkylether und/oder -ester von Fettalkoholen, Fettaminen und Fettsäuren zum Einsatz kommen, vorzugsweise solche mit einem Alkoxylierungsgrad zwischen zwischen 1 und 20, ganz besonders bevorzugt solche mit einem Alkoxylierungsgrad von < 6. Des weiteren eignen sich auch Alkylpolyglykoside der Formel R-O[G]X für diesen Zweck, wobei R für einen gesättigten oder ungesättigten Alkylrest mit 10 bis 20C-Atomen steht, G einen Glycosidrest bedeuted und x für eine Zahl von ≥1 steht.
Für die bessere Gebrauchstüchtigkeit der Wasser-in-ÖI-Verdickerdispersion dienen Hilfsemulgatoren und -dispergatoren vom Typ O/W. Eingesetzt werden können Sorbitanester der Formel R-[S]X in der R für einen gesättigten oder ungesättigten Fettalkohol, Fettamin oder Fettsäure mit 10 bis 20 C-Atomen steht, S einen Sorbitanrest bedeuted und x für eine Zahl von ≥10 steht. Des weiteren eignen sich Alkyl(oligo)glycoside der Formel R-O[G]X in der R für einen gesättigten oder ungesättigten Alkylrest mit 10 bis 20 C-Atomen steht, G einen Glycosidrest bedeuted und x für eine Zahl von ≥1 steht, sowie gesättigte oder ungesättigte Ethoxylate von Fettalkoholen, Fettaminen und Fettsäuren mit einem Alkoxylierungsgrad von >8.

Die erfindungsgemäßen Wasser-in-ÖI-Verdickerdispersionen, enthalten vorzugsweise
0,1 bis 50 Gew% der Komponente A)
10 bis 50 Gew% der Komponente B)
0,1 bis 30 Gew% der Komponente C)
0,1 bis 10 Gew % der Komponente D)
2 bis 20% der Komponente E)

Die Herstellung der erfindungsgemäßen Wasser-in-ÖI-Verdickerdispersionen erfolgt in der Weise, daß jeweils die gesamte Menge an Öl zusammen mit der erforderlichen Dispergator-/Emulgatormenge vorgegeben und 5 Minuten intensiv gerührt wird. Zu dieser Lösung wird das Verdickungsmittel unter intensiven Rühren innerhalb von 10 min portionsweise zugegeben, wodurch ein merklicher Viskositätsanstieg hervorgerufen wird. Nach Zugabe der erforderlichen Wassermenge bildet sich eine weitgehend homogene Wasser-in-ÖI-Verdickerdispersion niedriger Viskosität.

Weiterhin wird die Verwendung der erfindungsgemäßen Wasser-in-Öl-Verdickerdispersionen zur Herstellung von jeglichen Druckpasten (insbesondere Reaktiv- und Pigmentdruck u.a.) zum Gegenstand der vorliegenden Anmeldung gemacht.

Das erfindungsgemäß beschriebene Verfahren eignet sich für die Herstellung von flüssig formulierten Verdickungsmitteln sowie deren Einsatz als Verdickungsmittel für Druckprozesse, insbesondere Textildruckprozesse. Die erfindungsgemäßen Wasser-in-Öl-Verdickerdispersionen verhalten sich ökologisch günstiger als konventionelle Systeme, die auf Mineralöl basieren.

### Beispiele

Das erfindungsgemäße Verfahren der Herstellung von den Wasser-in-Öl-Verdickerdispersionen ist nachfolgend am Beispiel von Rapsöl und Rapsölmethylester als Ölkomponente für verschiedene Mischungskomponenten dargestellt.

Die Herstellung der erfindungsgemäßen Wasser-in-ÖI-Verdickerdispersionen erfolgt in der Weise, daß jeweils die gesamte Menge an Öl zusammen mit den in der Tabelle angegebenen Dispergator-/Emulgatormengen vorgegeben und 5 Minuten intensiv gerührt wird. Zu dieser Lösung wird das Verdickungsmittel unter intensiven Rühren innerhalb von 10 min portionsweise zugegeben, wodurch ein merklicher Viskositätsanstieg hervorgerufen wird. Nach Zugabe der erforderlichen Wassermenge bildet sich eine weitgehend homogene Wasser-in-ÖI-Verdickerdispersion niedriger Viskosität mit den in der Tabelle angegebenen Eigenschaften (Viskositätsangaben bei D=10s⁻¹s, Ölphasenbildung nach Zentrifugieren in [mm]). Als Dispergator wurden erfindungsgemäße Oleylglycoside mit den genannten HLB-Werten eingesetzt.

**Tab.1: Besonders geeignete Flüssigformulierungen in Rapsöl und Rapsölmethylester (RME) mit Lefasolverdicker 2 (Basis: Ammoniumsalz einer Polyacrylsäure)**

| Öltyp | HLB | Öl [%] | Emu [%] | Wasser [%] | Verdicker [%] | Viskosität [Pas] | Phasentrennung [mm] |
|---|---|---|---|---|---|---|---|
| RME | 3,7 | 30 | 30 | 5 | 35 | 0,72 | 6 |
| RME | 3,7 | 35 | 30 | 5 | 30 | 0,85 | 11 |
| RME | 3,7 | 30 | 25 | 5 | 40 | 1,18 | 5 |
| RME | 3,7 | 40 | 15 | 5 | 40 | 1,3 | 8 |
| RME | 4,3 | 40 | 25 | 5 | 30 | 0,45 | 11 |
| RME | 4,3 | 40 | 10 | 10 | 40 | 2,9 | 15 |
| RME | 4,3 | 40 | 15 | 5 | 40 | 0,76 | 11 |
| Rapsöl | 3,7 | 30 | 25 | 5 | 40 | 4,8 | 2 |
| Rapsöl | 3,7 | 40 | 15 | 5 | 40 | 5,2 | 3 |
| Rapsöl | 3,7 | 30 | 10 | 20 | 40 | 35,3 | 4 |
| Rapsöl | 3,7 | 40 | 10 | 20 | 30 | 13,7 | 6 |
| Rapsöl | 3,7 | 40 | 25 | 5 | 30 | 1,8 | 3 |
| Rapsöl | 3,7 | 30 | 25 | 5 | 40 | 4,8 | 1 |
| Rapsöl | 4,3 | 30 | 30 | 10 | 30 | 2,0 | 1 |
| Rapsöl | Anfomul | 30 | 25 | 5 | 40 | 3,9 | 1 |
| Rapsöl | 3,8 | 40 | 15 | 5 | 40 | 2,7 | 2 |
| Rapsöl | 4,0 | 40 | 15 | 5 | 40 | 3,1 | 2 |
| Rapsöl | 4,2 | 40 | 15 | 5 | 40 | 2,65 | 2 |

Die aus der statistischen Versuchsplanung hervorgegangenen Rezeptierungen für Lefasolverdicker 2 wurden auf weitere Polyacrylatverdicker der Fa.Lefatex bei Verwendung erfindungsgemäßer W/O Emulgatoren übertragen. Die Ergebnisse sind in nachfolgender Tabelle aufgeführt.

**Tab.2: Rezepturen für weitere W/O-Verdickeremulsionen bei Verwendung von Lefatexverdickern**

| **Verdickertyp** | **HLB** | **Verdicker** | **Öl** | **Emulgator** | **H2O** | **η (Pas)** | **Phase (mm)** |
|---|---|---|---|---|---|---|---|
| *In Rapsöl* | | | | | | | |
| 2491 WC | 3,7 | 0,3 | 0,3 | 0,3 | 0,1 | 3,5 | 20 |
| | 3,7 | 0,4 | 0,3 | 0,25 | 0,05 | 3,4 | 18 |
| | 3,7 | 0,3 | 0,4 | 0,25 | 0,05 | 2,0 | 25 |
| | 3,7 | 0,4 | 0,4 | 0,15 | 0,05 | 3,2 | 21 |
| | 4,0 | 0,3 | 0,3 | 0,3 | 0,1 | 3,4 | 18 |
| | 4,0 | 0,4 | 0,3 | 0,25 | 0,05 | 3,3 | 13 |
| | 4,0 | 0,3 | 0,4 | 0,25 | 0,05 | 1,6 | 25 |
| | 4,0 | 0,4 | 0,4 | 0,15 | 0,05 | 2,4 | 20 |
| | 4,3 | 0,3 | 0,3 | 0,3 | 0,1 | 4,2 | 19 |
| | 4,3 | 0,4 | 0,3 | 0,25 | 0,05 | 3,4 | 15 |
| | 4,3 | 0,3 | 0,4 | 0,25 | 0,05 | 3,3 | 19 |
| | 4,3 | 0,4 | 0,4 | 0,15 | 0,05 | 3,1 | 20 |
| 1030 LB | 4,0 | 0,3 | 0,3 | 0,3 | 0,1 | 5,2 | 11 |
| 846 LB | 4,3 | 0,3 | 0,4 | 0,25 | 0,05 | 6,5 | 19 |
| Lefasol V2 | 4,2 | 0,4 | 0,4 | 0,15 | 0,05 | 2,6 | 2 |

| *In RME* | | | | | | | |
|---|---|---|---|---|---|---|---|
| 1030 LB | 3,7 | 0,3 | 0,4 | 0,1 | 0,2 | 6,1 | 6* |
| | 3,7 | 0,2 | 0,4 | 0,2 | 0,2 | 2,4 | 5* |
| | 4,0 | 0,3 | 0,4 | 0,1 | 0,2 | 6,15 | 8* |
| | 4,0 | 0,2 | 0,4 | 0,2 | 0,2 | 1,9 | 8* |

Wie aus der Tabelle hervorgeht, lassen sich die erarbeiteten Rezepturen nicht ohne weiteres auf alle untersuchten Polyacrylatverdicker übertragen. Es werden zwar mit allen Polyacrylat basierenden Lefatex-Verdickungsmitteln niedrige und brauchbare Viskositätswerte erhalten, aber das geforderte Stabilitätskriterium einer geringen Phasentrennung wie es bei Lefasolverdicker2 erhalten wird, lässt sich näherungsweise nur mit Lafasolverdicker 1030 in RME erreichen.

Wie die folgende Tabelle zeigt, kann durch Erhöhung des Wasseranteils auf bis zu 7% eine deutlich verbesserte Lagerstabilität erreicht werden (Bsp. Lefasolverdicker2).

**Tab. 3: Verbesserung der Phasentrennung durch Erhöhung des Wassergehalts**

| **Verdickertyp** | **HLB** | **Verdicker** | **Rapsöl** | **Emulgator** | **H2O** | **η (Pas)** | **Phase (mm)** |
|---|---|---|---|---|---|---|---|
| Lefasol V2 | 4,2 | 0,4 | 0,4 | 0,15 | 0,05 | 2,6 | 2 |
| | 3,7 | 0,4 | 0,4 | 0,15 | 0,05 | 3,0 | 3 |
| | ***3,7*** | ***0,4*** | ***0,4*** | ***0,15*** | ***0,06*** | ***3,2*** | ***1*** |
| | ***3,7*** | ***0,4*** | ***0,4*** | ***0,15*** | ***0,07*** | ***3,3*** | ***1*** |

Die Viskositätszunahme auf 3,3 Pas spielt unter praktischen Gesichtspunkten keine wesentliche Rolle, solange der Wert unter 4 Pas bleibt. Erst oberhalb einer Viskosität von ca. 4-10 Pas weisen Flüssigformulierungen unzureichende Fließeigenschaften auf. Insofern könnte diese als optimal zu bezeichnende Flüssigformulierung durch weitere Wasserzugabe im Bedarfsfall weiter stabilisiert werden.

Die Verwendung von natürlichen und biologisch abbaubaren Ölen ist für die Flüssigformulierung von Verdickungsmitteln von großem Interesse. Obgleich das vornehmliche Ziel die Flüssigformulierung von Verdickern in Rapsöl und RME war, galt es auch die Anwendbarkeit der Forschungsergebnisse auf andere in Frage kommenden natürlichen Öle zu überprüfen, um ein möglichst breites Anwendungsspektrum der Forschungsergebnisse sicherzustellen. Zu diesem Zweck wurden beispielhaft 4 weitere natürlichen Öle für die Flüssigformulierung von Lefasolverdicker2 nach folgender Rezeptur verwendet.
Emulsion: 40% Lefasolverdicker2
40% Öl
15% Emulgator (HLB 3,7)
5% Wasser

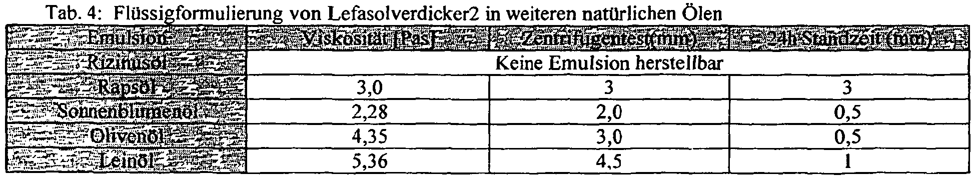

Wie aus der Tabelle hervorgeht, eignen sich mit Ausnahme von Rizinusöl auch andere natürliche Öle für die Flüssigformulierung von Verdickungsmitteln. Sowohl mit Leinöl, Olivenöl als insbesondere mit Sonnenblumenöl lassen sich sehr stabile Flüssigformulierungen der Verdickungsmittel herstellen, wobei im Falle von Leinöl und Olivenöl bei der gegebenen Rezeptur hohe Viskositätswerte erhalten werden. Dies lässt sich aber durch Feineinstellung der Rezeptur korrigieren.
Hervorzuheben ist die Flüssigformulierung mit Sonnenblumenöl. Der resultierende Wasser-in-Öl-Verdickerdispersionen weisen eine ausgezeichnete Stabilität gegenüber der Phasentrennung auf und zeichnen sich auch durch niedrige Viskositätswerte aus. Außerdem wird eine farblose Verdickeremulsion/dispersion erhalten.

### Beispiele für Verwendung der Wasser-in-Öl-Verdickerdispergierung als "flüssige Verdickung" mit verschiedenen Bindemitteln

Mit den Druckpasten (40% Lefasolverdicker2 in Rapsöl bzw. RME) wurden Druckmuster nach dem Flachfilmdruckverfahren auf einem Zimmer Labordrucktisch vom Typ VP-RS-F mit Magnetrollrakel hergestellt. Die Druckversuche wurden unter folgenden Bedingungen durchgeführt und ausgewertet:

### • Maschinenparameter

| | |
|---|---|
| Magnetbandgeschwindigkeit | 5 m/min. , 20 m/min. |
| Rakeldurchmesser | 1,0 cm Durchmesser |
| Druck | Stufe 3 |

Gedruckt wurde ein Rakelzug in Kettrichtung

Die Drucke wurden anschließend an Luft getrocknet und 3 min bei 160°C fixiert. Ausgewertet wurde der Druckpastenauftrag und Durchdruck sowie die Biegesteifigkeit, Konturenschärfe, Farbtiefe und Reibechtheiten. Die Ergebnisse wurden mit Standarddruckergebnissen verglichen.

Die wesentlichen Ergebnisse dieser Druckversuche sind in Tabelle 5 beispielhaft für einen blauen Pigmentfarbstoff zusammenfassend dargestellt.

**Tab.5: Druckergebnisse von Standardverdickern und neuen Flüssigformulierungen**

| | Verdicker 4 (Standard 1) | | Alcoprint PTF (Standard 2) | | Lefasolverdicker 2 "Pulver" | | Lefasolverdicker 2 in Rapsöl | | Lefasolverdicker 2 in RME | |
|---|---|---|---|---|---|---|---|---|---|---|
| Druckgeschwindigkeit | 5 m/min | 20 m/min | 5 m/min | 20 m/min | 5 m/min | 20 m/min | 5 m/min | 20 m/min | 5 m/min | 20 m/min |
| Viskosität 10 s⁻¹ [Pas] | 7,31 | 7,31 | 7,83 | 7,83 | 6,97 | 6,97 | 6,66 | 6,66 | 8,0 | 8,0 |
| Pastenauftrag [g/m²] | 87,6 | 86,4 | 88,9 | 82,4 | 88,7 | 82,9 | 89,6 | 87,1 | 87,1 | 85,6 |
| Farbtiefe K/S (580 nm) | 12,95 | 13,09 | 15,16 | 13,54 | 13,1 | 12,78 | 10,7 | 11,1 | 12,3 | 12,2 |
| Durchdruck [%] | 9,7 | 10,2 | 9,6 | 8,3 | 21,2 | 20,0 | 20,6 | 18,6 | 20,4 | 21,2 |
| Trockenreibechtheit | 4-5 | 4-5 | 4-5 | 4-5 | 4 | 4 | 4 | 4 | 4 | 4 |
| Naßreibechtheit | 3-4 | 3-4 | 4-5 | 4 | 4 | 4 | 4 | 4 | 3-4 | 4 |
| Biegesteifigkeit [mNcm²] | 4,06 | 3,7 | 3,6 | 3,5 | 3,3 | 3,4 | 2,9 | 2,8 | 2,9 | 3,2 |
| Linienbreite Kette [mm] | 0,663 | 0,6441 | 0,6644 | 0,6570 | 0,5815 | 0,5585 | 0,5855 | 0,5865 | 0,5619 | 0,5365 |
| Standardabw. Kette [mm] | 0,0448 | 0,0483 | 0,0474 | 0,0466 | 0,0484 | 0,0457 | 0,0412 | 0,0449 | 0,0486 | 0,0467 |
| Linienbreite Schuß [mm] | 0,6846 | 0,6292 | 0,629 | 0,5882 | 0,6083 | 0,5781 | 0,6139 | 0,5752 | 0,5274 | 0,5332 |
| Standardabw. Schuß [mm] | 0,0528 | 0,0519 | 0,0566 | 0,0465 | 0,0530 | 0,0549 | 0,0526 | 0,0565 | 0,0464 | 0,0485 |

Wie die Ergebnisse der Druckversuche zeigen, werden mit den neuen Verdickerformulierungen in Rapsöl und RME weitestgehend identische Druckresultate im Vergleich zu Standardverdickungen erhalten. Für die neuen Verdickersysteme ist der bessere Durchdruck, die geringere Biegesteifigkeit (weicher Griff) sowie die Verbesserung der Linienbreite hervorzuheben. Die Trockenreibechtheiten liegen ½ Echtheitsnote unter den Werten der Standardverdicker, während die Nassreibechtheiten sogar um durchschnittlich ½ Echtheitsnote höher als beim Standard liegen. Die Reibechtheiten schneiden mit einer durchschnittlichen Echtheitsnote von 4 gut ab. Besonders hervorzuheben ist, dass durch das Rapsöl bzw. RME keine Verschlechterung der Echtheiten im Vergleich zur reinen Pulvermarke hervorgerufen wird. Die Farbtiefe der Neuentwicklungen ist zufriedenstellend, wenn auch nicht ganz die Farbwerte der Standardverdicker erreicht werden. Die Druckpastenstabilität entspricht derer von herkömmlichen Systemen.

Weitere anwendungstechnische Prüfungen der erfindungsgemäßen Wasser-in-Öl-Verdickerdispersionen wurden mit einer Reihe weiterer handelsüblicher Bindemittel vorgenommen. Die Flüssigformulierungen basieren auf der Basisrezeptur (Tab.3) mit einem Verdickerfeststoffgehalt von 40% in Rapsöl. Als Bindemittel wurden folgende Bindemittel von Lefatex eingesetzt:

| | | |
|---|---|---|
| Lefasol 171 | pH 4,5 | Vinylacetat-Acrylat_Binder |
| Lefasol 200 | pH 8 | Acrylat-Binder |
| Lefasol 202-1 | pH 6,5 | Acrylat-Binder |
| Lefasol 371 | pH 7,5 | PUR-Binder |

### Rezeptur für die Druckpaste:

X % Flüssigformulierung des Verdickungsmittels (Rezept Tab.3)
0,2% Lefasol 473-1
1,0% Lefasol VH 17-1
7,0 bzw.15,0% Binder
3,0% Pigment Imperon Blau K-B
y% Wasser demin.

Zur Herstellung der Druckpaste wurden Hilfsmittel, Farbstoff und Wasser vermengt und das Bindemittel unter hochtourigem Rühren hinzugefügt. Anschließend wurde das flüssige Verdickungsmittel zugegeben und noch 5 min gerührt.
Mit den so hergestellten Druckpasten wurden Flachfilmdrucke auf Baumwolle durchgeführt und bei 160°C 3 min fixiert. Die Druckergebnisse sind in den beiden nachfolgenden Tabellen aufgeführt.

**Tab.6: Druckpasten aus Flüssigformulierung Lefasolverdicker 2491 in Rapsöl**

| Binder | Verdicker (%) | η (Pas ) | Auftrag (g/m²) | Durchdruck (%) | Farbtiefe (K/S) | Reibechth trocken | Reibechth nass | Biegesteifigk . (mNcm) |
|---|---|---|---|---|---|---|---|---|
| 171/7 | 0,98 | 7,6 | 79,4 | 13,4 | 12,39 | 3-4 | 2-3 | 2,70 |
| 171/15 | 1,1 | 7,5 | 79,9 | 9,1 | 13,64 | 4 | 2-3 | 2,77 |
| 200/7 | 1,0 | 7,7 | 79,4 | 9,6 | 13,09 | 4 | 2-3 | 3,31 |
| 200/15 | 1,15 | 7,8 | 80,3 | 4,7 | 14,63 | 4 | 3 | 3,61 |
| 202-1/7 | 0,88 | 7,3 | 78,7 | 14,1 | 11,61 | 3-4 | 2-3 | 2,74 |
| 202-1/15 | 1,0 | 7,9 | 78,1 | 5,3 | 13,57 | 4 | 2-3 | 2,92 |
| 371/7 | 0,73 | 7,1 | 80,5 | 13,8 | 10,17 | 3 | 2 | 3,42 |
| 371/15 | 0,66 | 7,2 | 78,1 | 13,3 | 12,21 | 4 | 2 | 5,29 |

**Tab.7: Druckpasten aus Flüssigformulierung Lefasolverdicker2 in Rapsöl**

| Binder | Verdicker (%) | η (Pas ) | Auftrag (g/m²) | Durchdruck (%) | Farbtiefe (K/S) | Reibechthtrocken | Reibechth nass | Biegesteifigk (mNcm) |
|---|---|---|---|---|---|---|---|---|
| 171/7 | 0,75 | 7,5 | 90,6 | 34,9 | 11,02 | 3 | 3 | 2,85 |
| 171/15 | 1,0 | 7,2 | 86,8 | 20,0 | 13,10 | 4 | 3-4 | 2,77 |
| 200/7 | 0,83 | 7,4 | 84,1 | 33 | 10,77 | 4 | 3 | 3,17 |
| 200/15 | 0,8 | 7,6 | 83,0 | 25,3 | 11,76 | 3-4 | 3 | 3,43 |
| 202-1/7 | 0,62 | 7,2 | 87,5 | 72,0 | 6,76 | 4 | 3-4 | 2,79 |
| 202-1/15 | 0,75 | 7,5 | 86,6 | 16,8 | 11,07 | 3-4 | 3-4 | 3,39 |
| 371/7 | 0,60 | 7,8 | 86,1 | 37,1 | 9,85 | 3 | 2-3 | 3,63 |
| 371/15 | 0,66 | 7,1 | 82,6 | 23,4 | 12,89 | 3-4 | 2-3 | 5,56 |

Wie die Ergebnisse zeigen, musste der Verdickeranteil in Abhängigkeit vom verwendeten Bindemittel und der Bindemittelmenge im Hinblick auf ein konstantes Viskositätsniveau angepasst werden. Das bedeutet, dass das Verdickungsvermögen des Verdickungsmittels durch die Zusammensetzung und den pH-Wert des Bindemittels beeinflusst wird. Dieser Sachverhalt trifft für andere Verdickungsmittel auch häufig zu und ist bei der Druckpastenherstellung in jedem Fall zu berücksichtigen.
Der Druckpastenauftrag und das Durchdruckverhalten werden vom Bindemittel nur unwesentlich beeinflusst und sind als gut zu bezeichnen. Auch die Farbtiefe und die Biegesteifigkeitswerte sind zufriedenstellend. Interessanterweise unterscheiden sich die Reibechtheiten bei den verschiedenen Bindemitteln nur sehr wenig und auch die Erhöhung des Bindergehalts von 7% auf 15% führt zu keiner wesentlichen Veränderung der Echtheiten(1/2 Echtheitsnote). Generell lässt sich aber feststellen, dass mit Lefasolverdicker2 (optimale Eigenschaften in der Flüssigformulierung) bessere Echtheiten als mit Lefasolverdicker 2491 erhalten werden.
Die Untersuchung der alkalischen und sauren Schweißechtheiten führte durchweg zu Echtheitsnoten von besser als 4.

### Druck mit Emulsionen aus natürlichen Ölen

In weitergehenden Versuchen wurde auch die Druckpastenherstellung und das Applikationsverhalten des Lefasolverdicker2 bei Verwendung anderer natürlicher Öle untersucht. Die Flüssigformulierung des Verdickers basiert auch hierbei auf der Basisrezeptur (Tab.3) mit einem Verdickeranteil von 40%. Folgende Druckpaste wurde für die Flachfilmdrucke verwendet:
Druckpaste: 0,2% Lefasol 473-1
1 % Lefasol VH 17-1
15% Binder Lefasol 202-1
2% Farbstoff Imperonblau K-B
x% Flüssigformulierung
y% Wasser
100%

**Tab.8: Druckergebnisse mit Lefasolverdicker2/andere natürliche Öle**

| ***Öl*** | **Verdickeranteil (%)** | **(Pas) Viskositat** | **(%) Auftrag** | **Durchdruck (%)** | **Reibechth troken** | **Reibechth nass** | **Biegsteifigk (mN/cm)** |
|---|---|---|---|---|---|---|---|
| **Sonnen-bluinen-** | 0,50 | 7,4 | 69,8 | 39,6 | 4-5 | 3-4 | 2,69 |
| **Oliven-** | 0,51 | 7,1 | 71,8 | 25,3 | 4 | 3 | 2,59 |
| **Lein-** | 0,52 | 7,4 | 73,8 | 28,0 | 4-5 | 3-4 | 2,58 |

Auch bei Verwendung anderer natürlicher Öle für die Flüssigformulierung, können keine negativen Einflüsse auf das Druckergebnis festgestellt werden. Es werden farbstarke Drucke hoher Echtheit erhalten.

## Patentansprüche

1. Flüssige und gießförmige Zubereitung einer Wasser-in-ÖI-Verdickerdispersion, enthaltend mindestens
A) ein Verdickungsmittel auf Basis
A1) synthetischer Polyelektrolyte, ausgewählt aus der Gruppe der Homo- und Copolymerisate von ungesättigten Säuren wie Acryl- und Maleinsäure oder
A2) natürlicher Polyelektrolyteausgewählt aus der Gruppe der Alginate
in einer Menge von 0,1 bis 50 Gew.%, bezogen auf das Gewicht der Zubereitung,
B) ein natürliches unmodifiziertes oder modifiziertes Öl auf Basis von
B1) Rapsöl
B2) Sonnenblumenöl
B3) Erdnussöl
B4) Olivenöl
B5) Leinöl
in einer Menge von 10 bis 50 Gew.%, bezogen auf das Gewicht der Zubereitung,
C) ein oder mehrere Emulgatoren und Dispergatoren vom Typ W/O auf Basis von
C1) Sorbitanester der Formel R-[S]X in der R für einen gesättigten oder ungesättigten Fettalkohol, Fettamin oder Fettsäure mit 10 bis 20 C-Atomen steht, S einen Sobitanrest bedeutet und x für eine Zahl von ≥ 1steht,
C2) Alkyl(oligo)glycoside der Formel R-O[G]X in der R für einen gesättigten oder ungesättigten Alkylrest mit 10 bis 20 C-Atomen steht, G einen Glycosidrest bedeutet und x für eine Zahl ≥ 1 steht,
C3) gesättigten oder ungesättigten Ethoxylaten von Fettalkoholen, Fettaminen und Fettsäuren mit einem Alkoxylierungsgrad von <6,
in einer Menge von 0,1 bis 30 Gew.% der Komponente C bezogen auf das Gewicht der Zubereitung,
D) ein oder mehrere Hilfsemulgatoren und -dispergatoren vom Typ O/W auf Basis von
D1) Sorbitanester der Formel R-[S]X in der R für einen gesättigten oder ungesättigten Fettalkohol, Fettamin oder Fettsäure mit 10 bis 20 C-Atomen steht, S einen Sorbitanrest bedeutet und x für eine Zahl von ≥ 10steht,
D2) Alkyl(oligo)glycoside der Formel R-O[G]X in der R für einen gesättigten oder ungesättigten Alkylrest mit 10 bis 20 C-Atomen steht, G einen Glycosidrest bedeutet und x für eine Zahl ≥ 1 steht steht,
D3) gesättigten oder ungesättigten Ethoxylaten von Fettalkoholen, Fettaminen und Fettsäuren mit einem Alkoxylierungsgrad von >8,
in einer Menge von 0,1 bis 10 Gew.%, bezogen auf das Gewicht der Zubereitung,
E) Wasser
in einer Menge von 2 bis 20 Gew.% bezogen auf das Gewicht der Zubereitung.

2. Zubereitung nach Anspruch 1, **dadurch gekennzeichnet, dass** die Komponente A ausgewhält ist aus der Gruppe der Alkali- und Ammoniumsalze der synthetischen und natürlichen Polyelektrolyte.

3. Zubereitung nach einem der Ansprüche 1 bis 2, **dadurch gekennzeichnet, dass** die Komponenten A, B, C und D jeweils als Mischung vorliegen.

4. Druckpasten, insbesondere für den Reaktiv- und Pigmentdruck auf textilen Materialien, **gekennzeichnet durch** einen Gehalt an einer Wasser- in-Öl-Verdickerdispersion nach einem der Ansprüche 1 bis 3.

## Claims

1. Liquid and pourable preparation of a water-in-oil thickener dispersion, containing at least
A) a thickening agent based on
A1) synthetic polyelectrolytes, selected from of the group of the homo- and copolymerisates of unsaturated acids such as acrylic acid and maleic acid or
A2) natural polyelectrolytes selected from the group of the alginates
at a quantity of 0.1 to 50% by weight, relating to the weight of the preparation,
B) a natural unmodified or modified oil based on
B1) canola oil
B2) sunflower oil
B3) peanut oil
B4) olive oil
B5) linseed oil
at a quantity of 10 to 50% by weight, relating to the weight of the preparation,
C) one or more emulsifiers and dispersants of the type W/O based on
C1) sorbitan ester of the formula R-[S]X, in which R stands for a saturated or unsaturated
fatty alcohol, fatty amine or fatty acid with 10 to 20 C atoms, S means a sorbitan residue and x stands for a number ≥ 1,
C2) alkyl (oligo)glycosides of the formula R-O[G]X, in which R stands for a saturated or unsaturated alkyl residue with 10 to 20 C atoms, G means a glycoside residue and x stands for a number ≥ 1,
C3) saturated or unsaturated ethoxylates of fatty alcohols, fatty amines and fatty acids with a degree of alkoxylisation of <6,
at a quantity of 0.1 to 30% by weight of the component C relating to the weight of the preparation,
D) one or more auxiliary emulsifiers and auxiliary dispersants of the type O/W based on
D1) sorbitan ester of the formula-[S]X, in which R stands for a saturated or unsaturated fatty alcohol, fatty amine or fatty acid with 10 to 20 C atoms, S means a sorbitan residue and x stands for a number ≥ 10,
D2) alkyl (oligo)glycosides of the formula R-O[G]X, in which R stands for a saturated or unsaturated alkyl residue with 10 to 20 C atoms, G means a glycoside residue and x stands for a number ≥ 1,
D3) saturated or unsaturated ethoxylates of fatty alcohols, fatty amines and fatty acids with a degree of alkoxylisation of >8,
at a quantity of 0.1 to 10% by weight, relating to the weight of the preparation,
E) water
at a quantity of 2 to 20% by weight relating to the weight of the preparation.

2. Preparation according to claims 1, **characterised in that** the component A is selected from of the group of the alkali salts and ammonium salts of the synthetic and natural polyelectrolytes.

3. Preparation according to one of the claims 1 to 2, **characterised in that** the components A, B, C and D each are present as a mix.

4. Printing pastes, in particular for reactive printing and pigment printing on textile materials, **characterised by** a content of a water-in-oil thickener dispersion according to one of the claims 1 to 3.

## Revendications

1. Préparation liquide et coulante d'une dispersion épaississante d'eau dans l'huile, contenant au moins
A) un agent épaississant à base
A1) de polyélectrolytes synthétiques, choisis parmi le groupe des homo- et des copolymères d'acides insaturés comme les acides acrylique et maléique, ou
A2) de polyélectrolytes naturels choisis parmi le groupe des alginates,
en une quantité de 0,1 à 50 % en poids, rapporté au poids de la préparation,
B) une huile naturelle non modifiée ou modifiée à base de
B1) huile de colza
B2) huile de tournesol
B3) huile d'arachide
B4) huile d'olive
B5) huile de lin
en une quantité de 10 à 50 % en poids, rapporté au poids de la préparation,
C) un ou plusieurs émulsionnants et dispersants du type eau/huile à base de
C1) ester de sorbitan de la formule R-[S]X, dans laquelle R représente un alcool gras, une amine grasse ou un acide gras saturés ou insaturés avec 10 à 20 atomes de carbone, S un radical sorbitan et x un nombre ≥ 1,
C2) alkyl(oligo)glycosides de la formule R-O[G]X, dans laquelle R représente un radical alkyle saturé ou insaturé avec 10 à 20 atomes de carbone, G signifie un radical glycoside et x représente un nombre ≥ 1,
C3) éthoxylates d'alcools gras, d'amines grasses ou d'acides gras saturés ou insaturés avec un degré d'alcoxylation <6,
en une quantité de 0,1 à 30 % en poids de composant C, rapporté au poids de la préparation,
D) un ou plusieurs émulsionnants et dispersants auxiliaires du type eau/huile à base de
D1) ester de sorbitan de la formule R-[S]X, dans laquelle R représente un alcool gras, une amine grasse ou un acide gras saturés ou insaturés avec 10 à 20 atomes de carbone, S signifie un radical sorbitan et x représente un nombre ≥ 10
D2) alkyl(oligo)glycosides de la formule R-O[G]X, dans laquelle R représente un radical alkyle saturé ou insaturé avec 10 à 20 atomes de carbone, G signifie un radical glycoside et x représente un nombre ≥ 1,
D3) éthoxylates d'alcools gras, d'amines grasses ou d'acides gras saturés ou insaturés avec un degré d'alcoxylation >8,
en une quantité de 0,1 à 10 % en poids, rapporté au poids de la préparation,
E) de l'eau
en une quantité de 2 à 20 % en poids, rapporté au poids de la préparation.

2. Préparation selon la revendication 1, **caractérisée en ce que** le composant A est choisi parmi le groupe des sels alcalins et ammoniacaux des polyélectrolytes synthétiques et naturels.

3. Préparation selon l'une quelconque des revendications 1 à 2, **caractérisée en ce que** les composants A, B, C et D sont respectivement présents comme mélanges.

4. Pâtes d'impression, en particulier pour l'impression sur des matériaux textiles avec réaction et par des pigments, **caractérisées par** une teneur en dispersion épaississante d'eau dans l'huile selon l'une quelconque des revendications 1 à 3.
